Europäisches Patentamt

(19) European Patent Office    (11) Publication number:    **0 128 967**

Office européen des brevets    **B1**

(12)    **EUROPEAN PATENT SPECIFICATION**

(45) Date of publication of patent specification: **20.05.87**    (51) Int. Cl.⁴: **B 29 C 65/74**

(21) Application number: **83105902.7**

(22) Date of filing: **16.06.83**

(54) Process and apparatus for cutting and sealing thermoplastic films or sheets.

(43) Date of publication of application:
**27.12.84 Bulletin 84/52**

(45) Publication of the grant of the patent:
**20.05.87 Bulletin 87/21**

(84) Designated Contracting States:
**BE DE FR IT NL**

(56) References cited:
**CH-A- 508 470**
**DE-U-7 422 093**
**GB-A-1 083 284**
**US-A-2 726 706**
**US-A-3 441 460**

(73) Proprietor: **THE DOW CHEMICAL COMPANY**
**2030 Dow Center Abbott Road P.O. Box 1967**
**Midland, MI 48640 (US)**

(72) Inventor: **Tumminia, Dennis Ray**
**3243 McKinley Road**
**Midland Michigan 48640 (US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2 (DE)**

Courier Press, Leamington Spa, England.

# 0 128 967

**Description**

The invention resides in a process and apparatus for manufacturing bags or other containers from thermoplastic films or sheets having a thickened closure or other thickened section comprised of a thermoplastic material. According to the invention, webs of the film are sealed along the sides or peripheral portions thereof to form an enclosure comprising the bag. At the time the side seals of the bag are formed, the material is commonly cut from a web of film by the same element which does the sealing.

The document GB—A—083 284, which discloses the features of the precharacterising portion of claim 1 and 8, describes a method and an apparatus for heat sealing at least two webs of heat sealable material arranged in face to face relation by using an apparatus comprising two relatively movable members each having a groove aligned and facing one another, one member carrying a heat sealing member extending in the longitudinal direction of the groove and at least partly outside this groove, heating means for applying heat to the sealing member and moving means for moving said members relatively towards and away from one another and when clamping the heat sealable material sandwiched between the members displacing the webs outside the plane of intersection of the open faces of the grooves into the groove opposite to the sealing member carrying member. When continuing the application of heat to the heat sealing member the webs are severed through. Although usually a circular cross-section has been used a flat strip wire as sealing element was mentioned. This reference does not teach the use of a cutting and sealing element having a flat cross-section with a height to width ratio of from 5:1 to 2:1 and being positioned inclined with respect to the film plies nor describes a method or an apparatus adapted for cutting and sealing a film or a sheet having thickened sections thereon.

The "cutter/sealer" element is normally a metallic alloy wire which prior to this invention had customarily been of a circular cross section. To cut through and seal both the film and thickened sections of the thermoplastic material, such as a polyethylene resin, the wire would be heated to about 204°C (400°F) above the degradation temperature of the thermoplastic material. Degraded polymer which is created by contact of the material with the hot wire can create a wax on the sealing equipment reducing its efficiency and requiring frequent shutdown for cleaning. It can also contaminate the product. Production lines customarily have been shut down frequently just for removal of wax build-up on the sealing equipment.

A circular cross-sectioned wire has been employed in the past because it is readily available and because it is the best cross-section for avoiding twisting, sagging and vibratory motion, the latter sometimes resulting in electric shorting between the wire and the rest of the sealing equipment. It also provides a more uniform heat gradient throughout the wire cross-section. However, because of its rounded profile, i.e., its circular cross-section, it does not melt and pierce a plastic film as well as a wire having a sharper edge approaching the film to be cut and sealed, therefore, resulting in an excessive wax build-up.

It is the object of this invention to provide specifically a high-speed process and apparatus for cutting and sealing thermoplastic material having thickened sections thereon whereby an improved cutting and sealing operation on plastic film plies minimizes the build-up of wax on the sealing components without unduly sacrificing the sealability of the products being manufactured.

The object is solved by an apparatus with features according to claim 1 and a process with features according to claim 8. The other claims refer to preferred embodiments of the invention.

The invention resides in a high-speed process for cutting and sealing portions of thermoplastic materials, such as films or sheets, for forming bags or other containers which include thickened sections such as are found in bags with integral thermoplastic closure portions, as for example, taught in U.S. Patent No. Re 28,969. It has been found that changing the shape of the wire significantly reduces such wax build-up. The improved process and apparatus results from the employment of a hot metal alloy cutting and sealing element, preferably in the form of a wire of a generally flat shape having a ratio of height to width of from 5:1 to 2:1 and preferably from 3:1. The wire is suspended below the film during the inoperative, i.e., noncutting, interval. During the cutting interval, the wire travels with respect to the film so that a film engaging edge, adjacent one of the wire ends, is higher at the thicker sections of the film, such as at the thickened closure sections, with respect to a remote section of the film. It will be understood that the wire could also be positioned above the film without detrimentally affecting its intended purpose of cutting and sealing of the film. It is more convenient, however, to position the film above the drum 10 and the wire and to perform the cutting and sealing function in that position.

The inclination of the wire with respect to the film is such that the film engaging edge of the wire will cut through the thickened portion of the film while the film engaging edge of the wire will cut through the remaining portion of the film without the wire passing through and above the upper surface of the film. Accordingly, in order to obtain good sealing of the edges of the film plies, it is desired that the hot film engaging edge of the wire be as near to the cut edges of the film plies as possible where the heat from the wire is most effective to melt the edges of the film plies.

The inclination of the wire is necessary, of course, to assure that the film engaging edge of the wire will pass through the thickened portions of the film plies. The inclination of the wire from the horizontal varies with the thickness of the film or sheet, and more effectively so, with the thickness of the thickened portions on the film or sheet. The wire passes through the film quickly so as to minimize contact between the film and the hot wire. In operation with a film oriented at least in the machine direction, such a shaped wire passing with such a height rise through the film at a high speed will cause the oriented film to pull quickly

2

back from the wire so that the contact between the wire and the film is minimized to a point limited by the necessary sealing of the thermoplastic plies forming the product. The narrow edge of the wire can be pointed should desired results necessitate a higher shearing factor. By use of the concepts of the present invention a substantial reduction in wax build-up which would otherwise occur is made possible.

Figure 1 is a schematic side view of a cutting and sealing apparatus which can incorporate the process of the present invention;

Figure 2 is an isometric view looking at one end of the slotted drum of Figure 1;

Figure 3 is a greatly enlarged showing of the mechanism of the present invention and being a partial section of the mechanism shown in Figure 2;

Figure 4 is a cross-sectional view taken along reference line 4—4 of Figure 3, adding the clamp of Figure 1, and showing a preferred embodiment of the cutter/sealer element of this invention;

Figures 5A, 5B, 5C, 5D and 5E show in cross section, other possible variations of the cutter/sealer element of the present invention;

Figures 6A, 6B, 6C and 6D illustrate the sequence of events as the cutter/sealer element passes through the plies of a thermoplastic film, as the film shrinks away from the cutter/sealer element; and

Figure 7 is a graphical representation of the effect of wire shape and speed on wax accumulation.

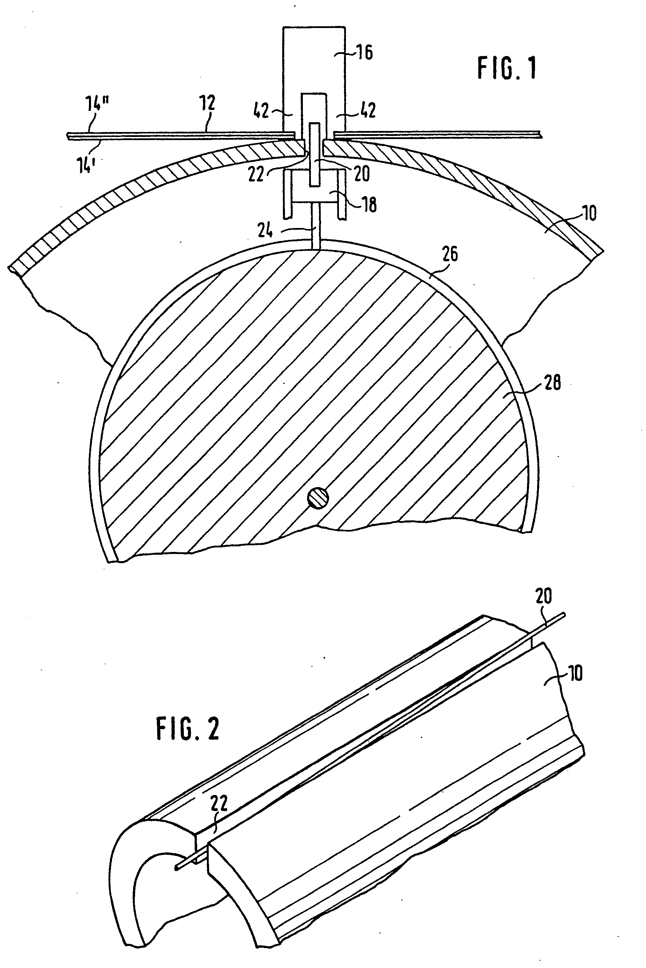

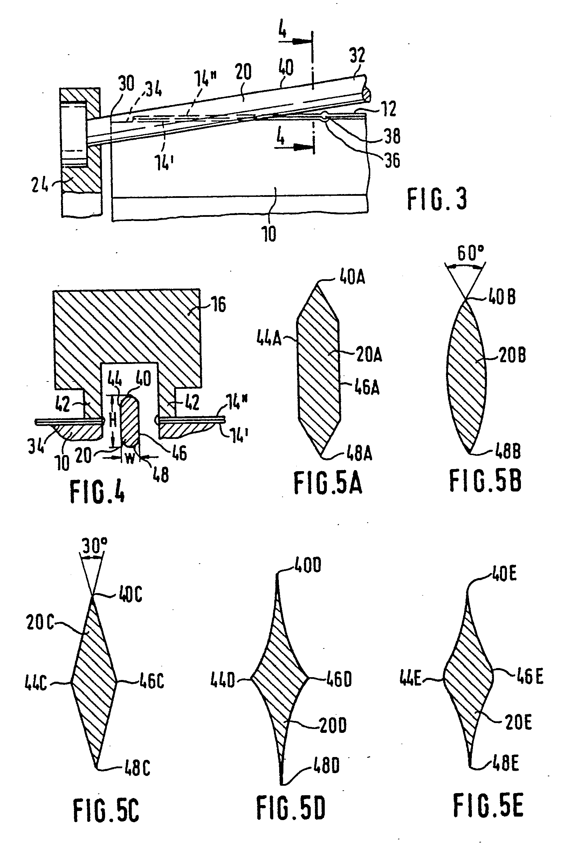

Referring to the general configuration of the cutting and sealing apparatus of Figure 1 useful for making bags or other containers, there is shown a drum 10 and a web of a thermoplastic film of sheet 12, comprising plies 14' and 14''. The film is secured to the drum by a clamp 16 positioned directly over a movable mechanism 18 which carries a cutting/sealing element or wire 20. Several such clamp 16 and movable mechanism 18 combinations can be located at spaced intervals about the circumference of the drum 10, as desired. Mechanism 18 slides inwardly and outwardly within a drum cavity 22 as determined by an end connector 24 as it rides along a groove 26 formed about the peripheral edge of an eccentric cam 28, the mechanism being shown in its outermost position. After the film is cut and sealed by mechanism 18, it is thereafter cooled on the drum 10 and taken off as bags in a stock and boxed (not shown). The details of how the wire 20 operates within the cavity 22 of drum 10 is shown more clearly in Figures 2 and 3 where it can be seen that the wire 20 is carried adjacent the ends of the drum and is supported so that its terminal end 30 is supported in cavity 22 in a lower position than its portion 32 adjacent the thicker section of the film. Wire 20 is heated through its end connector 24 by a conventional electrical current supply source, not shown.

As shown in Figure 3, a drum surface 34 contains a groove 36 for carrying a thickened thermoplastic section or protrusion such as a zipper closure profile 38 of a lower engaging thermoplastic film ply 14' of film 12 which has been cut and sealed into container segments. Above the thermoplastic film 12 is the hot wire 20 which is shown in its elevated position and after it has passed through the thermoplastic film plies 14' and 14''. The rise or elevation of wire 20 above the drum surface 34 is higher adjacent the portion 32 than it is adjacent its terminal end 30, as illustrated.

In actual practice, an edge resurface 40, which is the top of wire 20 and which constitutes the initial film engaging part thereof, is illustrated at about the uppermost preferred limit for wire travel. This upper limit is reached when the terminal end 30 has just passed through film 12. In one specific embodiment of the invention, the rise of edge 40 was about 1.27 to 1.5 mm (50 or 60 mils) above drum surface 34 at the portion 32 and about 0.5 to 0.6 mm (20 or 25 mils) at the terminal end 30 of the wire 20 as shown in Figure 3. Due to the fact that the wire is forced downwardly by the thickened section of the thermoplastic material the wire is suspended at a higher elevation near the zipper closure 38. Also, in a high-speed process if the wire rises too high after it passes the film material, there may be a tendency as the thermoplastic film relaxes to be frictionally engaged by the wire and pulled and degradated by the heat of the wire. This can be avoided by stopping the wire at a desired height after it has passed through the thermoplastic film plies. In a preferred embodiment the elevated portion of the wire is positioned at least twice the distance to another less thick section of the material.

Figure 4 is a detailed schematic view taken along the line 4—4 of Figure 3, but also showing clamp 16 and wire 20 after the wire has passed through the film plies 14' and 14'' which are clamped by jaws 42 of the clamp 16 on each side thereof; the wire 20 being in the position shown in Figure 3.

The wire 20 illustrated in Figure 4 is a preferred embodiment. It is essentially rectangular in shape with flat sides 44 and 46 and rounded ends 40 and 48. The height (shown as "H") to the width (shown as "W") dimension ratio can vary from 5:1 to 2:1 and accomplish the purposes of the present invention. However, the best results occur when the ratio is closer to 3:1.

For example, good results have been obtained when the height was 2 mm (80 mils) and the width 0.6 mm (25 mils). In other cases, depending upon the film materials and thicknesses involved, particularly that of the thickened profile through which the hot wire must pass, a height of 1.5 mm (60 mils) and a width of 0.6 mm (25 mils) has performed very well as has a height to width ratio of from 2 to 0.76 mm (80 to 30 mils). The fact that the wire has rounded ends 40 and 48 has not minimized significantly the effectiveness of the wire in cutting and sealing the thermoplastic film plies 14' and 14''.

Other wire cross-sectional configurations are shown in Figures 5A through 5E, which maintain height to width ratios contemplated by this invention and which will function in a manner within the scope of this invention even though the cross-sectional shapes vary from that shown in the preferred embodiment of

3

wire 20 of Figure 4. The invention herein disclosed includes various sealing or cutting element shapes which may be called a wire, knife, protrusion, or the like.

Instead of rounded ends 40 and 48 as for wire 20, the ends 40A and 48A of wire 20A of Figure 5A are more pointed. This may be helpful if sharpness is desired in particular situations where unusually tough thermoplastic materials which do not readily soften are used. The sides 44A and 46A of wire 20A are essentially flat and parallel. Other cross-sectional shapes of the wire are shown in Figure 5B where the wire 20B is generally lens-shaped in cross-section with pointed ends 40B and 48B. In Figure 5C the wire 20C is generally diamond-shaped in cross-section with pointed ends 40C and 48C and pointed sides 44C and 46C. In Figure 5D the wire 20D is more star-shaped or of a modified diamond-shaped cross-sectional configuration with similarly pointed ends 40D and 48D and sides 44D and 46D. In Figure 5E the wire 20E has, in cross-section, more bulbously shaped sides 44E and 46E with pointed ends 40E and 48E. These various cross-sectional configurations are merely intended to show possibilities and are not exhaustive of all the cross-sectional configurations which may be operable and capable of achieving the intended purposes. However, all embodiments as contemplated within this invention are of a generally elongated configuration. In each case, the ends may be rounded or pointed as meets the needs of a particular application.

The type of film materials for which the invention is particularly applicable are all thermoplastic materials capable of severing and sealing by means of the wire of the invention. Exemplary of such materials are olefinic polymers or copolymers, polyesters, nylon, vinylidene chloride or vinyl chloride polymers and copolymers, hydrolized ethylene vinyl alcohol, or the like.

It will be understood that the film material to be cut and sealed in accordance with the invention may be composed of two or more plies in which each ply may be formed of a multi-layered composite film in which the individual layers are of dissimilar plastic materials. For example, one layer of a ply, or both plies, may be an olefinic polymer or copolymer, for example, ethylene, propylene or a heat shrinkable film such as vinylidene chloride copolymers and copolymers of vinylidene chloride with vinyl chloride and other ethylenically unsaturated monomers. A second layer of the ply or plies may be an adhesive plastic material such as ethylene/unsaturated ester copolymers, for example, ethylene/vinyl acetate; unsaturated carboxylic acid polymers such as ethylene/acrylic acid; low molecular weight polyethylene, and the like.

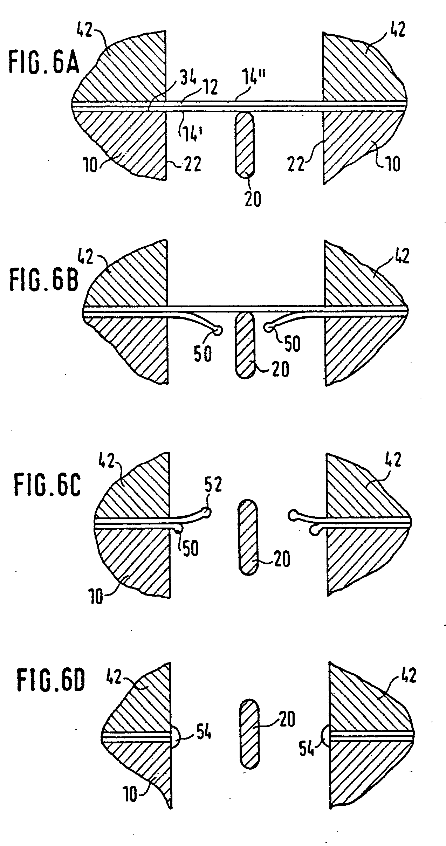

The manner in which the wire 20 cuts through the film plies 14' and 14'' is illustrated in the sequence shown in Figures 6A through 6D. Figure 6A shows the wire 20 in a position just as it approaches the two film plies 14' and 14''. Figure 6B shows the wire 20 as it has severed the first ply 14' leaving melting ends 50 and before it has severed the second ply 14''. The machine direction orientation built into the film by its stretching during its manufacture is customarily great enough so that upon severing by the wire 20 the first ply 14' has shrunk away significantly from the wire 20 so that there is essentially no contact between the two before the wire severs the second ply 14''. Figure 6C illustrates the condition of the plies 14' and 14'' just as the wire 20 has completed severing film ply 14'' having melted ends 52. The melted ends 50 of the lower ply 14', being at that point already essentially shrunk back to the clamping jaws 42 which hold the film plies together as they are cut and sealed. Figure 6D shows the wire 20 at its uppermost stop position and the two film plies 14' and 14'' shrunk back to the clamping jaws 42 and drum cavity 22 and forming a beaded seal 54 comprised of melted ends 50 and 52. This beaded seal is what forms the edge of the bag being produced.

It became apparent in performing the process of this invention that the wax build-up and the total film weight loss both decreased by decreasing the effective cross-sectional area of the heated wire 20.

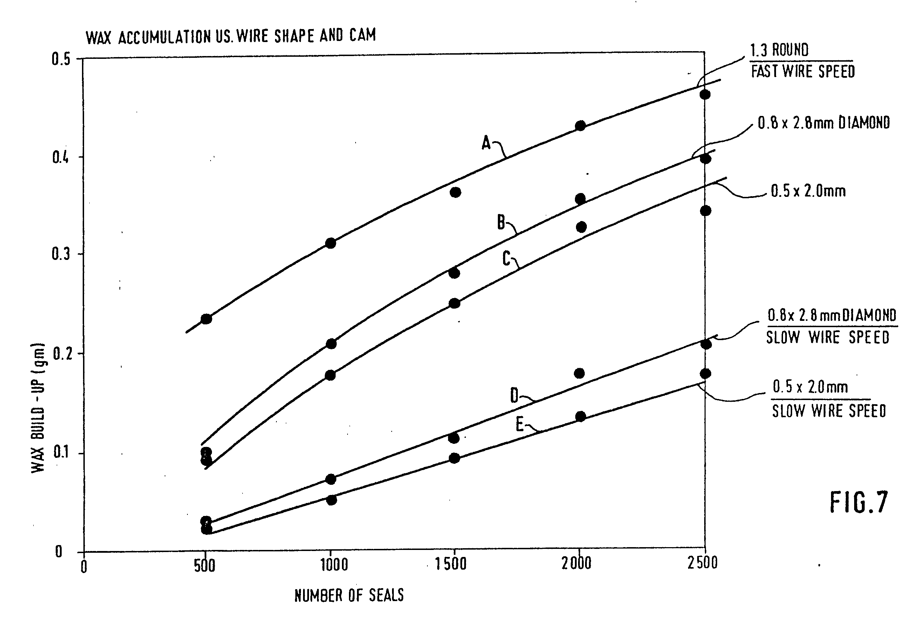

Figure 7 graphically illustrates the effect of wire shape and speed of film penetration on wax accumulation. Run A illustrates a high-speed run with a round cross-sectionally shaped wire. Run B shows a similar run but using a wire having a generally diamond cross-sectional configuration, somewhat like that typified in Figure 5C. Run C shows the results employing a generally flat cross-sectionally shaped wire 20 in accordance with a preferred embodiment illustrated in Figure 4. As can be seen, with the speed the same for all three runs, the wax build-up on the jaws of the clamp 16 and sealing equipment generally was the least with the flat cross-sectionally shaped wires in accordance with the invention. The wax also gets on the final film product and gives off an undesirable odor. The seals were comparably good on all three runs. To further determine what the effect of the wire shape and speed would be on wax accumulation, runs B and C were repeated but at a slightly slower wire speed. It was found in both instances, as shown in Runs D and E, that the wax build-up was even less at somewhat slower speed. However, it was found that the seals were not as good as at the higher speed. The seal quality, as illustrated in the following Table A, shows that at a high speed, good seals were obtained with each of the different cross-sectionally shaped wires in 100 percent of the trials conducted. Significantly, few good seals were obtained at the lower speeds.

4

# 0 128 967

### TABLE A
### (Wire speed) vs. seal quality

| Wire | Wire speed | % Good seals |
|---|---|---|
| 1.3 mm Round | fast | 100 |
| | very slow | 12 |
| 0.5×2.0 mm | fast | 100 |
| Flat | slow | 100 |
| | slower | 0 |
| 0.8×2.8 mm | fast | 100 |
| Diamond | slow | 88 |
| 0.86×1.8 mm | fast | 100 |
| Flat | very slow | 16 |

The effect of the wire position versus wax build-up and film weight loss is typified by the examples in Table B. From this table it is apparent that the film weight loss in every instance and the wax build-up in at least one instance is less if the rise of the wire after it cuts the film is not too high.

### TABLE B
### Wire position vs. wax build-up, film weight loss

| Wire | Position* | Wax build-up gms/1000 seals | Film weight loss gms/1000 seals |
|---|---|---|---|
| 0.8×2.8 mm | A | 0.11 | 0.5 |
| Diamond | B | 0.09 | 0.32 |
| 0.86×1.8 mm | A | 0.06 | 1.24 |
| Flat | B | 0.06 | 0.86 |
| 0.56×1.8 mm | A | 0 | 0.62 |
| Diamond | B | 0 | 0.20 |

*A) The top of the wire is 1.3 mm above the drum surface at the zipper closure and 0.635 mm at the bottom of the bag.

*B) The dimensions (as in "A") are 1.0 mm and 0.5 mm respectively.

The wires in every case were equipped with a conventional moderate current source for heating and were made of high strength and high electrical resistance metals such as Inconel 625 metal alloy, Inconel X750 metal alloy, Chromel C and Chromel A metal alloys. Other well-known metal alloys might also be used. Whichever alloy is chosen for manufacture of the wire the relative relationships and the benefits of practicing the steps of the present invention would be expected to be comparable in relation to one another in the same material.

In summarizing the results obtainable by the present invention, it has been discovered that a wire having the cross-sectional configuration as previously described and within the concepts of this invention, decreases both the film weight loss and the wax build-up on the metal equipment surfaces while readily making good seals within a normal cycle time. This has been made possible in the cutting and sealing of plies of thermoplastics films having thickened sections by employing the steps of (1) using an elongated relatively flat wire having a height to width ratio of from 5:1 to 2:1, preferably about 3:1; (2) positioning the wire at an incline to the horizontal along its length so that the cutting edge piercing the film travels through the film only a short distance at the thinner sections of the film and a greater distance at the thicker sections thereof; (3) passing the wire through said film plies at a relatively high speed, whereby the orientation in the film plies is relaxed rapidly so that shrinkage of the film from the wire occurs speedily with the result that contact between the film plies and the wire is minimized. The free or unrestrained shrinkage of the film containing the enlarged or thickened section or profile, preferably employed in the practice of the invention was roughly 80 percent in the machine direction, with a slight growth, about 30 percent, realized in the transverse direction. The latter could be a shrinkage also if the film were more oriented in the transverse direction. There was little question that as a result of the practice of this invention reducing the amount of plastic material that the wire contacts reduces film weight loss and wax build-up. Thus, a high degree of shrinkage in the film aids in reducing film contact with the wire. A high wire speed primarily aids in maintaining good seals between the film plies using the effect of film shrink-back, while reducing wax

5

build-up on the wire and other components of the apparatus, particularly the legs of the clamp 16 and the cavity 22 of the drum. Additionally, (1) the inclination of the wire with respect to the generally horizontal position of the film plies, (2) the generally rectangular shape of the wire itself, and (3) the rise or elevational movement of the wire edge 40 above the film surface, including the thickened sections on the film plies, all served to reduce wax build-up on the structural parts of the apparatus, reduced the amount of film weight loss and still provided a good seal along the edges of the film plies to form structurally strong bags. It was found, however, that using an extremely sharp leading edge for the wire would not necessarily permit the plastic film to retract ahead of the wire faster than would a somewhat more rounded leading edge. Surprisingly, it was found that a sharp leading wire edge, such as those illustrated in Figures 5A through 5E, for example, did not lead to a further reduction in wax build-up. However, a sharpened leading edge of the wire resulted in a considerable reduction in the amount of film weight loss as compared to a round wire of similar cross-sectional area.

It has been known that large amounts of wax will be generated due to fragments of the polymer sticking to the wire if it is not hot enough. However, once an adequate wire temperature range has been reached, it has been found that an additional increase in temperature does not result in significant further reductions in the amount of wax generated or collected.

Reducing the speed by which the wire approaches the film should reduce the amount of wax generated by allowing the plastic to melt away from the path of the wire. However, a second fact was observed that was not expected. At slow wire speeds the orientation of a film relaxes prior to film separation. Such film relaxation reduces film orientation which is a strong factor in obtaining positive sealing and, accordingly, the resultant welds made at slow speeds had poor seal quality. A slower speed may allow more plastic to move out of the path of the wire at the thickened portion of the film plies and thus reduce the amount of the plastic material that contacts the wire, but seal quality may be sacrificed.

Some limitation on how tall and narrow the wire configuration may be is dependent on the warpage due to temperature gradients within the wire. Generally the wires used for this work had good strength at high temperatures. Some wire warpage was observed at the 5:1 height to width ratio but was not enough to prevent adequate testing. The preferred wire shape has a height to width ratio of about 3:1. Again, orientation appears to play a critical role in the sealing process. Normally the wire contacts and melts the film quickly. The film rapidly separates and shrinks back to the clamping jaws. By slowing the wire speed slightly the film is heated prior to contact with the wire and much of the orientation is lost. When the wire does finally contact the film, the film stretches in a rubbery-like fashion, melts through and slowly moves toward the edges of the clamping bar. The resulting weld is quite irregular and may have a high tendency to leak.

It is clear that the shape of the wire, the speed at which the wire approaches the film, the degree of orientation available in the film and the position and inclination of the wire with respect to the film and any enlarged profiles on the film are all factors which determine the amount of wax build-up, film weight loss and the quality of the seal which results. A proper balancing and control of all of these factors in the process will achieve the optimum or near optimum balance between wax build-up, film weight loss, and seal quality.

While certain representative embodiments and details have been shown for purposes of illustrating the invention, it will be apparent to those skilled in the art that various changes can be made therein without departing from the scope of the invention. For example, more than two plies of film could be cut and sealed according to the present invention.

**Claims**

1. An apparatus for cutting multiple plies of a film or sheet (12) formed from a thermoplastic material and simultaneously sealing the edges of the film, said apparatus comprising:
   (a) a film support surface (34) having at least one cavity (22);
   (b) means (16) for clamping said film (12) so that it extends across said cavity (22);
   (c) an elongated cutting and sealing element (20) having an elongated cross-section and a length at least as long as the film plies to be cut and sealed;
   (d) means (24, 28) for moving said element (20) into contact with and past said film (12);
   (e) means (24) for heating said element (20) and for moving its engaging edge quickly through said film plies (12) to sever and seal the same,
   characterized in that
   (f) the apparatus is adapted for processing thermoplastic material having at least one thickened section (38) thereon;
   (g) the cutting and sealing element (20) is positioned within said cavity (22) and the generally flat cross-section has a height to width ratio of from 5:1 to 2:1;
   (h) said cutting and sealing element (20) is inclined with respect to the film plies such that an elevated portion of the element (20) is positioned adjacent said thickened section (38) of the film plies so that after said film plies are severed, the element (20) adjacent the thickened section (38) is further from the film plies (12) than is otherwise generally the case.

2. Apparatus of claim 1 characterized in that the element (20) has a height to width ratio of about 3:1.

3. Apparatus of claims 1 or 2 characterized in that a drum (10) containing a groove (36) for carrying a thickened section (38) of the lower engaging thermoplastic film ply is provided as film supporting surface (34).

4. Apparatus of claim 3 characterized in that the elongated cutting and sealing element (20) is carried adjacent to the ends of the drum (10) so that its terminal end (30) is supported in the cavity (22) in a lower position than its portion (32) adjacent to the groove (36) of the drum (10) and the rise of the element (20) above the drum surface (34) is higher adjacent to the portion (32) close to the groove (36) than it is adjacent to its terminal end (30).

5. Apparatus of claim 4 characterized in that the portion (32) of the initial film engaging part or edge resurface (40) of the cutting element reaches its uppermost limit for travel when the terminal end (30) of the cutting element (20) has just past through the film (12).

6. Apparatus of claims 1 to 5 characterized in that the cutting element (20) is a wire having a cutting edge which is generally rounded at its width.

7. Apparatus of claims 1 to 5 characterized in that the cutting element (20) is a wire having a cutting edge which is generally pointed.

8. A process for cutting multiple plies of film or sheet (12) formed from thermoplastic material and simultaneously sealing the severed edges of the film by clamping the film plies adjacent to an area thereof to be cut and sealed;

heating a cutting and sealing element (20) having an elongated cross-section and a length at least as long as the film plies to be cut and sealed to a temperature sufficient to cut the film plies and seal the edges thereof;

moving said element so that an engaging edge (40) thereof passes through said film plies without the entire element (20) passing beyond the last ply to be engaged by the element (20) but sufficient to sever all such plies;

permitting the severed film plies to retract a given distance and form a sealed edge (54); characterized by

cutting and sealing a film or sheet having at least one thickened section (38) thereon using a cutting and sealing element (20) having a height to width ratio of from 5:1 to 2:1 and inclining said cutting and sealing element (20) with respect to the film plies such that an elevated portion of said element (20) is positioned adjacent said thickened section (38) of the film plies so that after said film plies are severed, the element (20) adjacent the thickened section is further from the film plies than is otherwise generally the case.

9. The process of claim 8 characterized by using a wire as cutting element (20).

10. The process of claim 9 characterized in that the elevated portion of the wire is positioned at least twice the distance to another less thick section of the material.

11. The process of claims 8 to 10 characterized in that the temperature of said element (20) and the speed at which the element (20) engages the film plies is selected in such a way that a first severed film ply shrinks from contact with that element prior to said element severing the next adjacent ply.

12. The method of any of the preceding claims characterized in that all plies are of the same thermoplastic material composition.

13. The method of any of the claims 1 to 11 characterized in that each ply is formed from a composite film of at least two layers in which the layers are of different thermoplastic material.

**Patentansprüche**

1. Vorrichtung zum Schneiden einer Vielzahl von Schichten eines Films oder Folie (12) aus thermoplastischem Material und gleichzeitiges Versiegeln der Kanten des Films, wobei die Vorrichtung aufweist:

(a) eine den Film tragende Oberfläche (34) mit mindestens einer Vertiefung (22),

(b) Mittel (16) zum Einspannen des Films (12), so daß er sich über die Vertiefung (22) erstreckt,

(c) ein langgestrecktes Schneid- und Siegelelement (20) mit einem länglichen Querschnitt und das mindestens so lang ist, wie die zu schiendenden und zu versiegelnden Filmschichten,

(d) Einrichtungen (24, 28) zum Bewegen des Elementes (20) in Kontakt mit und durch den Film (12),

(e) Einrichtungen (24) zum Erwärmen des Elementes (20) und zum schnellen Hindurchbewegen seiner angreifenden Kante durch die Filmschichten (12), um diese durchzutrennen und zu versiegeln, dadurch gekennzeichnet, daß

(f) die Vorrichtung zum Verarbeiten von thermoplastischem Material mit mindestens einem darauf angeordneten verdickten Abschnitt (38) ausgebildet ist,

(g) das Schneid- und Siegelelement (20) in der Vertiefung (22) angeordnet ist und der im allgemeinen flache Querschnitt ein Verhältnis von Höhe:Breite von 5:1 bis 2:1 aufweist,

(h) das Schneid- und Siegelelement (20) zu den Filmschichten hin derart geneigt ist, daß ein oberes Teilstück des Elementes (20) sich neben dem verdickten Abschnitt (38) der Filmschichten befindet, so daß nach dem Durchtrennen der Filmschichten das Element (20) neben dem verdickten Abschnitt (38) weiter von den Filmschichten (12) entfernt ist, als es sonst im allgemeinen der Fall ist.

**0 128 967**

2. Vorrichtung nach Anspruch 1, dadurch gekennzeichnet, daß das Element (20) ein Verhältnis von Höhe:Breite von etwa 3:1 aufweist.

3. Vorrichtung nach Ansprüchen 1 oder 2, dadurch gekennzeichnet, daß ein Trommel (10) mit einer Nut (36) zum Tragen eines verdickten Abschnittes (38) auf der unteren in Eingriff gelangenden Filmschicht als Film tragende Oberfläche (34) dient.

4. Vorrichtung nach Anspruch 3, dadurch gekennzeichnet, daß das langgestreckte Schneid- und Siegelelement (20) neben den Enden der Trommel (10) gehalten wird, so daß sein Anschlagende (30) innerhalb der Vertiefung (20) in einer tieferen Stellung gehalten wird als der Teil (32) neben der Nut (36) der Trommel (10) und die Aufwärtsbewegung über die Trommeloberfläche des dicht neben der Nut (36) befindlichen Teils (32) des Elementes (20) höher ist, als die des dem Endanschlag (30) benachbarten Teils.

5. Vorrichtung nach Anspruch 4, dadurch gekennzeichnet, daß der Teil (32) des Schneidelements, der zuerst den Film berührt oder die Kanten (40) ausbessert, sein oberstes Ende der Bewegung erreicht, wenn das Anschlagende (30) des Schneidelementes (20) gerade den Film (12) passiert hat.

6. Vorrichtung nach Ansprüchen 1 bis 5, dadurch gekennzeichnet, daß das Scheidelement (20) ein Draht mit einer über seine Breite im allgemeinen abgerundeten Schneidkante ist.

7. Vorrichtung nach Ansprüchen 1 bis 5, dadurch gekennzeichnet, daß das Schneidelement (20) ein Draht mit einer im allgemeinen scharfen Schneidkante ist.

8. Verfahren zum Schneiden einer Vielzahl von Schichten eines Films oder Folie (12) aus thermoplastischem Material und gleichzeitiges Versiegeln der durchgetrennten filmkanten durch

Einspannen der Filmschichten neben der Fläche, die geschnitten und versiegelt werden sollen,

Erwärmen eines Schneid- und Siegelelementes mit einem länglichen Querschnitt und das mindestens so lang ist, wie die zu schneidenden und zu versiegelnden Filmschichten auf eine ausreichende Temperatur, um die Filmschichten zu schneiden und die Kanten derselben zu versiegeln,

Bewegen dieses Elementes derart, da— eine angreifende Kante (40) deseslben die Filmschichten passiert, ohne daß jedoch das gesamte Element (20) über die letzte vom Element (20) angegriffene Schicht hinausgelangt, jedoch ausreichend weit, um alle Schichten durchzutrennen, Zulassen des Zurückziehens der durchgetrennten Filmschichten auf einen gegebenen Abstand und Ausbilden einer versiegelten Kante (54),

gekennzeichnet durch

Schneiden und Versiegeln eines Films oder Folie mit mindestens einem darauf angeordneten verdickten Abschnitt (38) unter Verwendung eines Schneid- und Siegelelementes (20) mit einem Verhältnis von Höhe:ßreite von 5:1 bis 2:1 und

Schrägstellen des Schneid- und Siegelelementes (20) zu den Filmschichten, so daß ein oberes Teilstück des Elementes sich neben dem verdickten Abschnitt (38) der Filmschichten befindet, so daß dem Durchtrennen der Filmschichten das Element (20) neben dem verdickten Abschnitt weiter von den Filmschichten entfernt ist, als es sonst im allgemeinen der Fall ist.

9. Verfahren nach Anspruch 8, gekennzeichnet durch Verwendung eines Drahtes als Schneidelement (20).

10. Verfahren nach Anspruch 9, dadurch gekennzeichnet, daß das obere Teilstück des Drahtes mindestens doppelt so weit entfernt ist wie von weniger dicken Teilen des Materials.

11. Verfahren nach Ansprüchen 8 bis 10, dadurch gekennzeichnet, daß die Temperatur dieses Elementes (20) und die Geschwindigkeit des Angriffs des Elementes an den Filmschichten so gewählt wird, daß eine zuerst durchtrennte Filmschicht durch Berührung mit dem Element schrumpft, ehe das Element die nächste benachbarte Schicht durchtrennt.

12. Verfahren nach jedem der vorhergehenden Ansprüche, dadurch gekennzeichnet, daß alle Schichten aus der gleichen thermoplastischen Materialzusammensetzung sind.

13. Verfahren nach jedem der Ansprüche 1 bis 11, dadurch gekennzeichnet, daß jede Schicht aus einem Filmverbund mit mindestens zwei Lagen gebildet ist, wobei die Lagen aus unterschiedlichem thermoplastischem Material sind.

**Revendications**

1. Dispositif pour couper les couches multiples d'un film ou d'une feuille (12) constituée d'une manière thermoplastique et pour souder en même temps les bords du film, ce dispositif comprenant:

a) une surface (34) de support du film comportant au moins une cavité (22);

b) un moyen pour fixer ce film (12) de manière à ce qu'il soit placé transversalement à la cavité (22);

c) un élément allongé (20) de coupe et de soudage ayant en coupe un forme allongée et une longueur au moins égale à celle des couches du film à couper et à souder;

d) des moyens (24, 28) pour déplacer cet élément (20) afin de l'amener en contact avec le film (12) et au-delà de ce film (12);

e) un moyen (24) pour chauffer l'élément (20) et pour faire passer rapidement son bord de contact à travers les couches (12) du film afin de couper et souder ces dernières, caractérisé en ce que

f) le dispositif est prévu pour traiter une matière thermoplastique comportant au moins une section épaisse (38);

8

g) l'élément (20) de coupe et de soudage est placé à l'intérieur de la cavité (22) et la section transversale généralement plate présente un rapport de la hauteur à la largeur qui est compris dans une gamme allant de 5/1 à 2/1;

h) l'élément (20) de coupe et de soudage est incliné par rapport aux couches du film, de sorte que la partie haute de l'élément (20) est contiguë à la section épaissie (38) des couches du film de telle manière que, après que les couches du film ont été coupées, l'élément (20) contigu à la section épaissie (38) est plus éloigné des couches (12) du film que cela est autrement généralement le cas.

2. Dispositif suivant la revendication 1, caractérisé en ce que l'élément (20) présente un rapport de la hauteur à la largeur d'environ 3/1.

3. Dispositif suivant l'une des revendications 1 ou 2, caractérisé en ce que un tambour (10) présentant une fente (36) pour supporter une section épaissie (38) de la couche inférieure du film thermoplastique avec laquelle il est en contact, est prévu comme surface (34) de support du film.

4. Dispositif suivant la revendication 3, caractérisé en ce que l'élément allongé (20) de coupe et de soudage est supporté au voisinage des extrémités du tambour (10) de sorte que son extrémité finale (30) est supportée dans la cavité (22) en un point situé olus bas que sa partie (32) contiguë à la fente (36) du tambour (10) et la hauteur de l'élément (20) au-dessus de la surface (34) du tambour au voisinage de la partie (32) proche de la fente (36) est supérieure à sa hauteur au voisinage de son extrémité finale (30).

5. Dispositif suivant la revendication 4, caractérisé en ce que la partie (32) de la région ou surface (40) du bord initial de l'élément de coupe en contact avec le film atteint sa limite supérieure de déplacement au moment où l'extrémité finale (30) de l'élément (20) de coupe vient de traverser le film (12).

6. Dispositif suivant les revendications 1 à 5, caractérisé en ce que l'élément (20) de coupe est un fil présentant un bord de coupe qui est généralement arrondi dans sa largeur.

7. Dispositif suivant les revendications 1 à 5, caractérisé en ce que l'élément (20) de coupe est un film présentant un bord de coupe qui est généralement pointu.

8. Procédé pour couper les couches multiples d'un film ou d'une feuille (12) constituée d'une matière thermoplastique et pour souder en même temps les bords coupés du film, comprenant

la fixation des couches du film contiguës à une région à couper et à souder de ce dernier;

le chauffage d'un élément (20) de coupe et de soudage ayant en coupe une forme allongée et une longueur au moins égale à celle des couches du film à couper et à souder, à un température suffisante pour couper les couches du film et pour souder ses bords;

le déplacement de cet élément de sorte que son bord (40) de contact traverse les couches du film sans que la totalité de l'élément (20) passe au-delà de la dernière couche à entrer en contact avec l'élément (20) mais suffisamment pour couper toutes ces couches; permettant aux couches du film coupé de se rétracter sur une distance donnée et de former un bord soudé (54);

caractérisé par

la coupe et le soudage d'un film ou d'une feuille présentant au moins une section épaissie (38) à l'aide d'un élément (20) de coupe et de soudage présentant un rapport de la hauteur à la largeur qui est compris dans un gamme allant de 5/1 à 2/1 et inclinaison de cet élément (20) de coupe et de soudage par rapport aux couches du film, de sorte que la partie haute de l'élément (20) est contiguë à la section épaissie (38) des couches du film de telle manière que, après que les couches du film ont été coupées, l'élément (20) contigu à la section épaissie est plus éloigné des couches du film que cela est autrement généralement le cas.

9. Procédé suivant la revendication 8, caractérisé par l'utilisation d'une film comme élément (20) de coupe.

10. Procédé suivant la revendication 9, caractérisé en ce que la partie haute du fil est placée à au moins deux fois la distance à une autre section moins épaisse de la matière.

11. Procédé suivant les revendications 8 à 10, caractérisé en ce que la température de l'élément (20) et la vitesse à laquelle cet élément (20) entre en contact avec les couches du film sont sélectionnées de telle manière qu'une première couche du film se rétracte et rompt le contact avec cet élément avant que celui-ci coupe la couche contiguë suivante.

12. Procédé suivant l'une quelconque des revendications précédentes, caractérisé en ce que toutes les couches sont constituées de la même matière thermoplastique.

13. Procédé suivant l'une quelconque des revendications 1 à 11, caractérisé en ce que chaque couche est formée d'un film multicouche d'au moins deux couches dans lequel les couches sont constituées de matières thermoplastiques différentes.

0 128 967

FIG. 1

FIG. 2

1

FIG. 3

FIG. 4

FIG. 5A

FIG. 5B

FIG. 5C

FIG. 5D

FIG. 5E

FIG.6A

FIG.6B

FIG.6C

FIG.6D

WAX ACCUMULATION US. WIRE SHAPE AND CAM

FIG.7

0 128 967